Europäisches Patentamt

European Patent Office

Office européen des brevets

(19)

(11) Publication number: **0 255 749 B1**

## EUROPEAN PATENT SPECIFICATION

(12)

(45) Date of publication of patent specification: **27.02.91**

(51) Int. Cl.⁵: **B62D 21/10**

(21) Application number: **87201474.1**

(22) Date of filing: **04.08.87**

(54) **Bodywork for a vehicle, in particular for an automobile, and process for manufacturing it.**

(30) Priority: **07.08.86 IT 2144086**

(43) Date of publication of application:
**10.02.88 Bulletin 88/06**

(45) Publication of the grant of the patent:
**27.02.91 Bulletin 91/09**

(84) Designated Contracting States:
**DE FR GB**

(56) References cited:
| EP-A- 0 142 581 | DE-A- 2 935 819 |
|---|---|
| DE-U- 1 828 812 | DE-U- 7 435 705 |
| GB-A- 910 039 | US-A- 2 230 448 |
| US-A- 3 073 647 | |

(73) Proprietor: **ALFA LANCIA S.p.A.**
**Viale Alfa Romeo**
**I-20020 Arese, Milan(IT)**

(72) Inventor: **Bassi, Aldo**
**Via Bodoni 2**
**I-20155 Milan(IT)**

(74) Representative: **De Carli, Erberto et al**
**ING. BARZANO' & ZANARDO MILANO S.p.A.**
**Via Borgonuovo, 10**
**I-20121 Milano(IT)**

EP 0 255 749 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a bodywork for a vehicle, in particular an automobile, comprising a floor pan constituted by a platform chassis, an upper framework and an auxiliary chassis, having the function of supporting the mechanical elements, the skin and the trimming of the same vehicle, according to the preamble of claim 1.

In designing and manufacturing the coachworks for series automobiles, the most widely presently used types are those with a monocoque body, wherein nearly all of the constituents of the bodywork perform structural functions.

This type of coachwork, in fact allows a higher saving in weight to be achieved, with the strength being the same, than as saved by other solutions, of the type having a separate chassis or an integrated chassis; but involves greater difficulties from the design standpoint, and requires large investments in the manufacturing process; therefore, it results financially advantageous in case of large-series production only.

Furthermore, a coachwork of monocoque type does not allow transformations or model variants to be easily accomplished, as it would be necessary on the contrary, for matching, within relatively short times, the technical novelties and the market demands, at least for cars produced on a limited-series basis.

From US-A-2 230 448 there is known a bodywork made of a frame and body assembled together as an integral structure, wherein for the purpose of obtaining convertible bodies a particular floor pan is provided having increased torsional and flexural strength. This floor pan is made of a bottom metal sheet having a shaped contour and portions developing according to plane and simple-curvature surfaces, and of a corrugated second metal sheet having generally the same contour as the bottom metal sheet and corrugations with crests secured to the latter. The corrugations extend in the longitudinal direction of the metal sheets of the floor and the outer ones have different lengths to adapt to the outer contour of the metal sheets.

Although the corrugations confer an increased strength to the floor pan, the shaping of the sheets requires the longitudinal corrugations to follow an angled or curved path, which not only renders construction of the floor pan more difficult but also reduces the strengthening capacity of the corrugated sheet. Furthermore, the presence of the corrugations on the upper surface of the floor pan requires additional flanges to be secured to the bottom surface of the bottom metal sheet for anchoring the upper framework to the floor pan. With such a known floor construction there is further a limited possibility of changing the shape of the metal sheets to provide different contours and/or different planar and curved developments of the floor pan.

Another floor pan construction for motor vehicles of the type having a unitary body is known from US-A-3 073 647, wherein the floor pan construction is made of a pair of rigid self-supporting platform members disposed in side by side relationship and interconnected by a tunnel cap to thereby provide a rigid self-supporting combined underbody and floor for the body.

Each of the platform members includes an upper flat metal sheet and a lower corrugated metal sheet secured thereto. The corrugations extend in the longitudinal direction of the metal sheets. At the transverse ends of the floor pan the sheets are held clamped by end caps rigidly engaged by rail members forming front and rear frames of the underbody structure.

This kind of floor pan construction may be advantageous for flat floors but is not sufficiently flexible for allowing different models of upper structure to be provided in conjunction therewith, because of its limited strength characteristics.

The purpose of the present invention is to provide a light bodywork, but resistant and particularly versatile, i.e., suitable for mounting different types of mechanical units and to be dressed with different skin models, in such a way that both the mechanical units and the skin can be modified rather easily and within relatively short times, and which can be manufactured by means of rather flexible processes, prevailingly accomplished by using equipment for general use, and not specific for a particular model.

This purpose is achieved according to the invention, by a bodywork having the features recited in claim 1. A process for manufacturing this bodywork is indicated in claim 9.

Thus, a bodywork is provided, wherein the forces applied to the car can be absorbed, even totally, by the floor pan of sandwich type, whilst the contribution supplied by the upper framework, by the auxiliary chassis, and by the skin panels, to the total flexural strength and torsional strength of the car can be he held at a minimum, although a whatever value can be anyway given there to as desired. In this case, the vehicle skin panels prevailingly perform a covering function, and can be designed more freely, as relates to the desired aesthetical and aerodynamic characteristics.

Another advantage of the proposed solution is represented by the fact that no expensive equipment is necessary for pressing the metal sheets for manufacturing the floor pan, because the desired configuration of the floor pan is prevailingly achieved by operations of shearing and bending of the two metal sheets, i .e., the upper sheet and the lower sheet, of the "sandwich", to give simple-curvature surfaces, such as a ruled surface, whereby the transversely extending corrugation do not undergo any bending along their length and so a wide possibility of modifying the floor pan is achievable without reducing its strengthening capacity.

Characteritics and advantages of the invention are now illustrated by referring to the hereto attached Figures 1 - 4, wherein a preferred form of practical embodiment of the same invention is shown for non-limitative exemplifying purposes.

Figure 1 shows a side-front perspective view of a bodywork according to the invention;

Figures 2 and 3 show details of the constraining means for parts of the bodywork shown in Figures 1 and 2;

Figure 4 is a schematic block diagram of the process of manufacturing of a car provided with the bodywork of Figure 1.

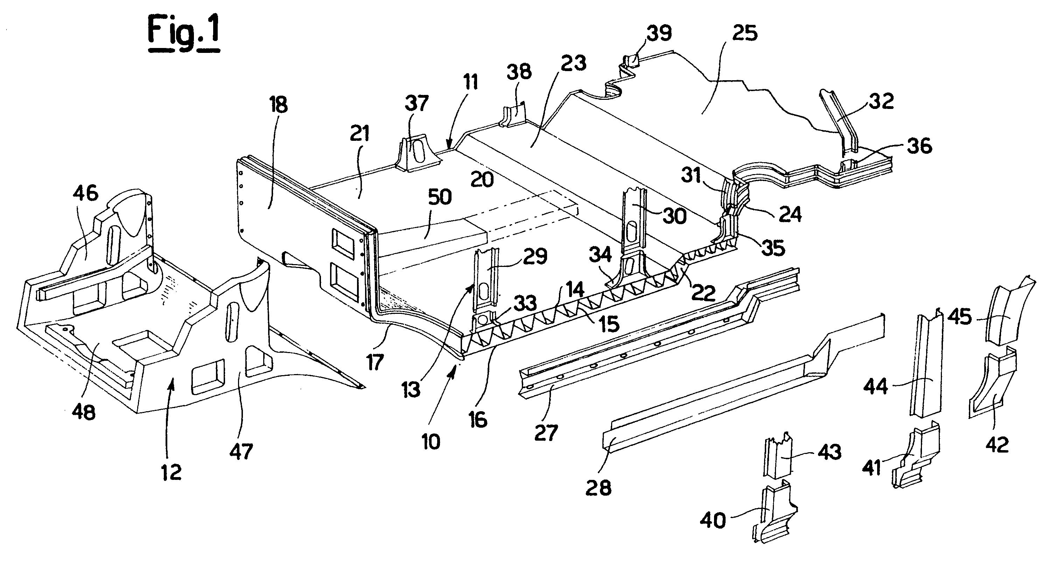

In Figure 1, with 10 the bodywork is generally indicated, which is equipped with a floor pan, formed by a platform chassis, accomplished according to the invention; with 11, 12, 13, the floor pan, the auxiliary chassis, the upper framework of the same bodywork 10 are indicated. The floor pan 11, the auxiliary chassis 12 and the upper framework 13 are connected with each other by means of connection means, which are disclosed in detail in the following.

The floor pan 11 has a structure of "sandwich" type, and is formed by three overlapping metal sheets 14, 15, 16, in particular steel sheets, wherein the first and third sheets 16 and 14 i.e., the lower sheet and the upper sheet, have configurations similar to each other, by shearing along the pre-established boundary and by bending to yield plane and simple-curvature surfaces, such as a ruled surface, and wherein the intermediate second sheet 15 extending substantially transverse to longitudidinal extension of is corrugated, and has the crests of the undulations the sheets alternatively 14 and 16 secured to the upper sheet 14 and the lower sheet 16, by a continuous welding, e.g., accomplished by a laser process, or by bonding by means of structural adhesives.

In order to increase the flexural and tensile stiffness of the floor pan 11, the hollows comprised between the metal sheets 14, 15, 16 can be filled, at least partially, with a foam of a foamed plastics material, or the metal sheets 14 and 16 can be partially dished.

In the example of Figure 1, the metal sheets 14 and 16 are bent, in their front portion, in 17, according to a preselected bending radius, to form a fireproof wall 18, which extends substantially perpendicularly to the general plane of the pan 11 and separates the front compartment from the passenger compartment 20, and supports the dashboard, the pedals and the steering column of the car; special openings provided in the wall 18, enable the steering column and the mechanical members connected with the pedals to pass through the wall. The metal sheets 14 and 16 run then horizontally, to form the floor pan portion 21 which supports the front seats of the car, not shown, and are bent in their central region at 22, according to a preselected curvature radius, to form the plane 23 which supports the rear seats, not shown; finally, they are further bent at 24, according to a preselected bending radius, to form the plane 25 which supports the rear boot.

Frontally, the floor pan is provided with an opening to which the tunnel of metal plate 50, housing the speed gear, is housed. In particular, the tunnel 50 could be extended, as indicated by the chain lines, to allow the passage of a transmission shaft, not shown, in case the car is a rear-drive car, or a front and rear wheel drive. The portions along the sides of the floor pan 11 are closed by box beams or profiles, such as the one shown in Figure 1, wherein the two half-shells 27 and 28 are shown detached from each other. The inner half-shell 27 is welded to the edges of the sheets 14 and 16 of the floor pan 11, and to it the outer half-shell 28 is subsequently welded.

Also the uprights of the upper framework 13 are formed by box beams; in Figure 1 the internal half-shells 29, 30, 31, 32 thereof are partially shown, which are welded to the internal bases 33, 34, 35, 36; said internal bases are fastened in their turn, by a continuous weld, to the metal sheet 14 of the floor pan 11; the internal bases fastened onto the other side of the floor pan are indicated with 37, 38, 39. In Figure 1 there are shown, detached, the external bases 40, 41, 42, and the external half-shells 43, 44, 45, which are welded to the corresponding internal half-shells, to form the uprights of the framework 13.

The external bases 40, 41, 42 are also welded to the external half-shell 28 of the beam which closes laterally the floor pan 11.

In the Figure, there are not shown the longitudinal members and the crossbeams, they too formed by box beams, which complete the framework 13.

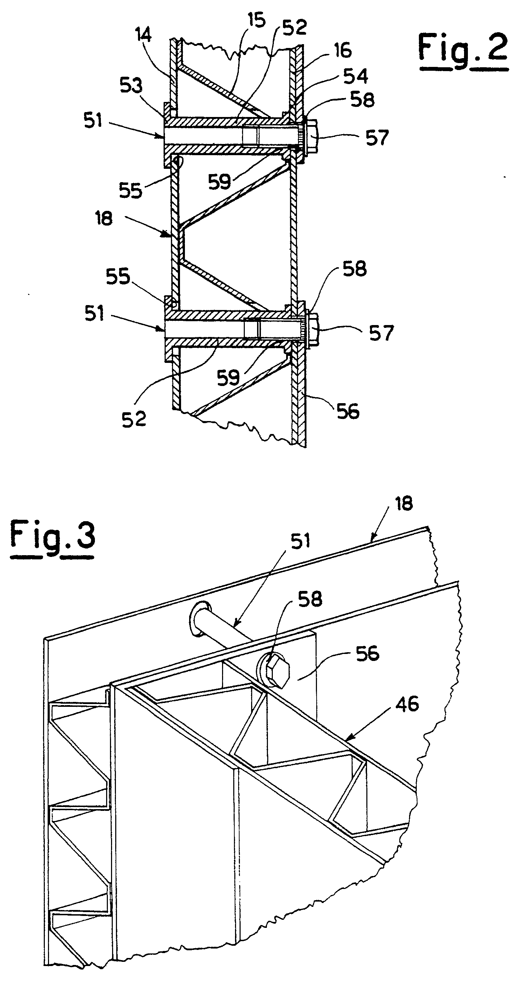

The auxiliary chassis 12 is fastened to the fireproof wall 18 by means of fastening elements such as those shown in Figure 3. The auxiliary chassis 12, is formed by side walls 46 and 47, and by a bracket 48; both the side walls and the bracket are formed by walls having a "sandwich" structure, with two outer metal sheets (14 and 16) and an interposed corrugated metal sheet (15), and closure box beams.

The auxiliary chassis 12, which could be also made in a more traditional way from pressed metal sheet and box beams, supports the drive unit of the car; hence, through its side walls 46 and 47, and through the bracket 48, the openings are provided which allow the passage of the related mechanical units, such as the arms of the steering assembly and the axle shafts, in case the vehicle is of the front-drive type.

The floor pan 11, supports the mechanical members and the dressing components of the car; none of them are shown, in that they are known from the prior art; the same floor pan, and by the upper framework, supported the panels of the skin of the car; also they are not shown, in that they can be easily accomplished by those skilled in the art.

In Figures 2 and 3, constraint elements 51 are shown, which are used for fastening the auxiliary chassis 12 to the wall 18, and are also particularly suitable for supporting those mechanical members which undergo strong stresses during the operation of the car.

Each member 51 is formed by a sleeve 52, provided with auxiliary end flanges 53 and 54, which is inserted inside special bores 55 provided in the "sandwich" of the wall 18 (or of the auxiliary chassis 12) and is welded to the metal sheet 14 of the same wall 18, in correspondence of the flange 53, whilst the flange 54 comes to rest against the other sheet 16 of the "sandwich".

Inside each sleeve 52 a screw 57 is screwed down, after having arranged a respective washer 58 and a flange 56, provided with bores 59, and welded to the walls 47 and 48 of the auxiliary chassis 12.

Thanks to this solution, all the three metal sheets of the "sandwich" contribute to react to the stresses due to the forces which are applied to the different parts of the floor pan and of the auxiliary chassis.

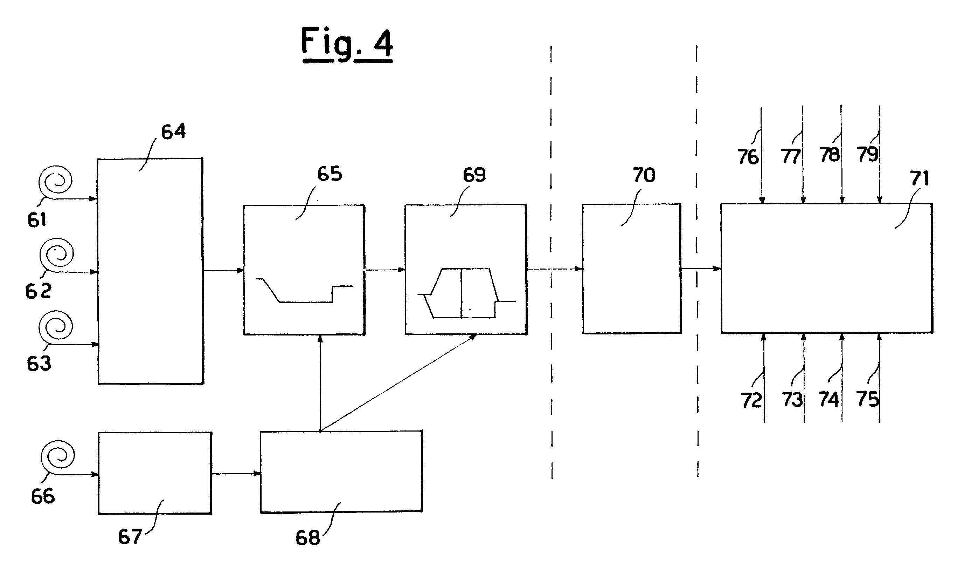

In Figure 4 the process of manufacturing of a car provided with a bodywork like that shown in Figure 1 is represented by a block diagram.

In the Figure, with 61, 62, 63 three metal sheet coils are indicated, which are fed to a processing station, represented by the block 64, where in the floor pan 11 and the auxiliary chassis 12 are manufactured; in this station, the metal sheets are sheared and bent, to assume the configuration of those indicated with the numerals 14, 15, 16 in Figure 1.

The metal sheets 14, 15, 16 are welded to each other, e.g., by a laser process, or bonded by structural adhesives, to form the "sandwich" structure of the pan 11, which is completed by the box beams, like that formed by the parts 27 and 28 shown in Figure 1, in the subsequent station, represented by the block 65.

By means of analogous operations, always in the station 64, the "sandwich" structure is accomplished of the auxiliary chassis 12, which is then completed in the subsequent station, represented by the block 65, with the closure box beams.

The closure box beams are manufactured by pressing in the station 67, fed by the metal coil 66, and by subsequent welding in station 68, from which they are sent to station 65.

In the same stations 67 and 68 also manufactured are the box beams which form the upper framework 13; these are sent to the station 69, and are welded to the floor pan 11, coming from the station 65.

In the station represented by the block 70 the operations of painting of the bodywork formed by the floor pan 11, the auxiliary frame 12 and the framework 13 are carried out.

In the subsequent station, represented by the block 71, the end assemblage is carried out of the car with the bodywork coming from the station 70, and with the mechanical or dressing sub-units or components.

In Figure 4, with the arrows 72, 73, 74, 75 the feed lines of the engine-speed gear assembly, of the steering sub-units or components, of the suspensions, of the wheels and brakes are respectively indicated.

The arrows 76, 77, 78, 79 respectively indicate the feed lines of the dashboard and seats, of the upholstery and internal and external accessories, of the panels of the skin, of bonnets and doors.

## Claims

1. Bodywork for a vehicle, in particular for an automobile, comprising a floor pan (11) formed by a platform chassis, an upper framework (13) and an auxiliary chassis (12) connected to each other and capable of supporting mechanical units, skin panels and dressing parts of the vehicle, wherein the floor pan (11) is formed by a first metal sheet (16) having a shaped contour and portions developing according to plane and simple-curvature surfaces and by a corrugated second metal sheet (15) having generally the same contour as said first metal sheet (16) and corrugations with crests secured to said first metal sheet (16), characterized in that a third metal sheet (14) having generally the same shape of said first metal sheet (16) is arranged overlapping said first metal sheet (16) and is secured to the protruding crests of said second metal sheet (15) to form a sandwich construction, in that the crests of said second metal sheet (15) extend substantially transverse to the longitudinal extension of said metal sheets (14, 16), and in that profile elements (27, 28) connect said first and third metal sheets (16 resp.14) along portions of said contour adjacent the ends of said corrugations.

2. Bodywork as claimed in claim 1, characterized in that said auxiliary chassis (12) is formed by two side walls (46, 47) and by a bracket portion (48) having a sandwich construction including two overlapping metal sheets and an interposed corrugated metal sheet having crests secured there-to.

3. Bodywork as claimed in claim 1, characterized in that said profile elements are composed of two half shells (27, 28), an inner one (27) of said shells being fastened to the edges of said first and third metal sheets (16 resp.14) and an outer one (28) of said shells being arranged to cover said inner shell (27).

4. Bodywork as claimed in claim 1, wherein said upper framework comprises box beams (29-32; 43-45), characterized in that said box beams (29-32; 43-45) are made of two half shells each secured to a respective base portion (33-36; 40-42) fastened to said floor pan (11).

5. Bodywork as claimed in claim 1, characterized in that said floor pan (11) comprises a front wall portion (18) extending substantially perpendicularly to the general plane of said floor pan (11).

6. Bodywork as claimed in claim 1, characterized in that the crests of the corrugated metal sheet (15) are welded to said first and third metal sheets (16 resp. 14) by means of continuous welding.

7. Bodywork as claimed in claim 1, characterized in that the crests of the corrugated metal sheet (15) are bonded to said first and third metal sheet (16 resp. 14) by means of adhesives.

8. Bodywork as claimed in claim 1, characterized in that the hollows between the corrugations of the corrugated metal sheet (15) are at least partially filled with a foamed plastics material.

9. Process for manufacturing a bodywork according to claim 1, comprising manufacturing a floor pan (11), an upper framework (13) and an auxiliary chassis (12) and assembling them together, wherein the floor pan (11) is manufactured by shaping a first metal sheet (16) according to plane and simple-curvature surfaces and by securing thereto a corrugated second metal sheet (15), characterized in that the corrugated second metal sheet (15) is bent to form corrugations extending substantially transverse to the longitudinal extension of said first metal sheet (16), in that a third metal sheet (14) is shaped generally as the third metal sheet (16) and is secured to said first and second metal sheets (16 resp. 15) to form a sandwich construction and in that profile elements (27, 28) are rigidly secured along portions of the contour of the first and third metal sheets (16 resp. 14) adjacent the ends of said corrugations.

10. Process as claimed in claim 9, characterized in that said auxiliary chassis (12) is manufactured by forming a bracket portion (48) and two side walls (46, 47) having a sandwich configuration made by bending a metal sheet to provide transverse corrugations thereon, and by interposing and securing the corrugated metal sheet between two further metal sheets.

**Revendications**

1. Carrosserie de véhicule, notamment d'automobile, comprenant un plateau de sol (11) formé par un châssis de plate-forme, un bâti supérieur (13) et un châssis auxiliaire (12), connectés mutuellement et capables de supporter des ensembles mécaniques, des panneaux de revêtement et des parties d'habillage du véhicule, dans laquelle le plateau de sol (11) est formé par une première feuille métallique (16) ayant une forme profilée et des parties développées suivant des surfaces planes ou à courbure simple, et par une seconde feuille métallique ondulée (15) ayant de façon générale la même configuration que la première feuille métallique (16) et ayant des ondulations qui ont des crêtes fixées à la première feuille métallique (16), caractérisée en ce qu'une troisième feuille métallique (14) ayant de façon générale la même configuration que la première feuille métallique (16) est disposée afin qu'elle recouvre la première feuille métallique (16) et est fixée aux crêtes en saillie de la seconde feuille métallique (15) afin qu'elles forment une construction sandwich, en ce que les crêtes de la seconde feuille métallique (l5) sont disposées en direction sensiblement transversale à la dimension longitudinale des feuilles métalliques (14, 16), et en ce que des éléments profilés (27, 28) raccordent la première et la troisième feuille métallique (16, respectivement 14) le long de parties du profil qui sont adjacentes aux extrémités des ondulations.

2. Carrosserie selon la revendication 1, caractérisée en ce que le châssis auxiliaire (12) est formé par deux parois latérales (46, 47) et par une partie de support (48) ayant une construction sandwich comprenant deux feuilles métalliques qui se recouvrent et une feuille métallique ondulée intermédiaire ayant des crêtes fixées aux deux autres feuilles.

3. Carrosserie selon la revendication 1, caractérisée en ce que les éléments profilés sont composés de deux demi-coquilles (27, 28), une demi-coquille interne (27) étant fixée aux bords de la première et de la troisième feuille métallique (16, respectivement 14) et une demicoquille externe (28) étant destinée à recouvrir la coquille interne (27).

4. Carrosserie selon la revendication 1, dans laquelle le bâti supérieur comporte des poutrescaissons (29-32 ; 43-45), caractérisée en ce que les poutrescaissons (29-32 ; 43-45) sont formées de deux demicoquilles fixées chacune à une partie respective de base (33-36 ; 40-42) fixée au plateau de sol (11).

5. Carrosserie selon la revendication 1, caractérisée en ce que le plateau de sol (11) comporte une partie de paroi avant (18) qui est sensiblement perpendiculaire au plan général du plateau de sol (11).

6. Carrosserie selon la revendication 1, caractérisée en ce que les crêtes de la feuille métallique ondulée (15) sont soudées à la première et à la troisième feuille métallique (16, respectivement 14) par soudage continu.

7. Carrosserie selon la revendication 1, caractérisée en ce que les crêtes de la feuille métallique ondulée (15) sont fixées à la première et à la troisième feuille métallique (16, respectivement 14) par des adhésifs.

8. Carrosserie selon la revendication 1, caractérisée en ce que les cavités délimitées entre les ondulations de la feuille métallique ondulée (15) sont remplies au moins partiellement d'une mousse de matière plastique.

9. Procédé de fabrication d'une carrosserie selon la revendication 1, comprenant la fabrication d'un plateau de sol (11), d'un bâti supérieur (13) et d'un châssis auxiliaire (12) et leur montage sous forme d'un tout, le plateau de sol (11) étant fabriqué par mise en forme d'une première feuille métallique (16) ayant des surfaces planes et de courbure simple et par fixation de cette feuille à une seconde feuille métallique ondulée (15), caractérisé en ce que la seconde feuille métallique ondulée (15) est cintrée afin qu'elle forme des ondulations en direction sensiblement transversale à la direction de la longueur de la première feuille métallique (16), en ce qu'une troisième feuille métallique (14) est mise en forme de manière générale de la même façon que la première feuille métallique (16) et est fixée à la première et à la seconde feuille métallique (16, respectivement 15) de manière qu'une construction sandwich soit formée, et en ce que des éléments profilés (27, 28) sont fixés rigidement le long de parties du profil de la première et de la seconde feuille métallique (16, respectivement 14) près des extrémités des ondulations.

10. Procédé selon la revendication 9, caractérisé en ce que le châssis auxiliaire (12) est fabriqué par formation d'une partie de support (48) et de deux parois latérales (46, 47) ayant une configuration sandwich formée par cintrage d'une feuille métallique afin que des ondulations transversales soient formées sur celle-ci, et par interposition et fixation de la feuille métallique ondulée entre deux feuilles métalliques supplémentaires.

**Ansprüche**

1. Aufbau für ein Fahrzeug, insbesondere für ein KraftfahrZeug, mit einer von einem Plattformchassis gebildeten Bodenplatte (11), einem oberen Rahmen (13) und einem Hilfschassis (12), welche miteinander verbunden sind und zur Halterung von mechanischen Einheiten. Außenblechen und Ausstattungsteilen ausgebildet sind, wobei die Bodenplatte (11) von einer ersten Metallplatte (16) mit geformter Kontur und mit Bereichen entsprechend einer Ebene oder Oberflächen einfacher Krümmung und von einer zweiten, gewellten Metallplatte (15) gebildet wird, welche im allgemeinen dieselbe Kontur wie die erste Metallplatte (16) aufweist und mit Rippen mit Erhebungen an der ersten Metallplatte (16) befestigt ist, dadurch gekennzeichnet, daß eine dritte Metallplatte (14) mit im wesentlichen derselben Form wie die erste Metallplatte (16) die erste Metallplatte (16) überlappend angeordnet ist und an den vorspringenden Erhebungen der zweiten Metallplatte (15) zur Ausbildung einer Sandwich-Konstruktion befestigt ist, daß sich die Erhebungen der zweiten Metallplatte (15) im wesentlichen quer zur Längserstreckung der Metallplatten (14,16) erstrecken, und daß Profilelemente (27,28) die erste und dritte Metallplatte (16 bzw. 14) entlang von Bereichen der Kontur nahe den Enden der Rippen verbinden.

2. Aufbau nach Anspruch 1, dadurch gekennzeichnet, daß das Hilfschassis (12) von zwei Seitenwänden (46,47) und einem Auflagerbereich (48) mit einer Sandwich-Konstruktion ausgebildet wird, welche zwei einander überlappende Metallplatten und eine zwischengeschaltete, gewellte Metallplatte mit an diesen befestigten Erhebungen umfaßt.

3. Aufbau nach Anspruch 1, dadurch gekennzeichnet, daß die Profilelemente von zwei Halbschalen (27,28) gebildet werden, wobei eine innere (27) der Schalen an den Kante der ersten und dritten Metallplatte (16 bzw. 14) befestigt ist und eine äußere (28) der Schalen zum Abdecken der inneren Schale (27) angeordnet ist.

4. Aufbau nach Anspruch 1, wobei der obere Rahmen Kastenstreben (29-32; 43-45) umfaßt, dadurch gekennzeichnet, daß die Kastenstreben (29-32; 43-45) von zwei Halbschalen gebildet werden, wobei Jede an einem an der Bodenplatte (11) befestigten entsprechenden Basisbereich (33-36; 40-42) befestigt ist.

5. Aufbau nach Anspruch 1, dadurch gekennzeichnet, daß die Bodenplatte (11) einen Vorderwandabschnitt (18) aufweist, welcher sich im wesentlichen normal auf die Hauptebene der Bodenplatte (11) erstreckt.

6. Aufbau nach Anspruch 1, dadurch gekennzeichnet, daß die Erhebungen der gewellten Metallplatte (15) mit der ersten und dritten Metallplatte (16 bzw. 14) durch eine Nahtschweißung verschweißt sind.

7. Aufbau nach Anspruch 1, dadurch gekennzeichnet, daß die Erhebungen der gewellten Metallplatte (15) mit der ersten und dritten Metallplatte (16 bzw. 14) durch Klebstoffe verbunden sind.

8. Aufbau nach Anspruch 1, dadurch gekennzeichnet, daß die Hohlräume zwischen den Rippen der gewellten Metallplatte (15) zumindest teilweise mit einem geschäumten Kunststoff gefüllt sind.

9. Verfahren zur Herstellung eines Aufbaus nach Anspruch 1, welches die Herstellung einer Bodenplatte (11), eines oberen Rahmens (13) und eines Hilfschassis (12) und einen Zusammenbau derselben umfaßt, wobei die Bodenplatte (11) durch Formung einer ersten Metallplatte (16) entsprechend einer Ebene und Oberflächen einfacher Krümmung und durch Befestigung einer gewellten, zweiten Metallplatte (15) an dieser hergestellt wird, dadurch gekennzeichnet, daß die gewellte Metallplatte (15) gebogen wird, um im wesentlichen quer zur Längserstreckung der dritte Metallplatte (16) verlaufende Rippen auszubilden, daß eine dritte Metallplatte (14) im wesentlichen wie die dritte Metallplatte (16) geformt wird und an der ersten und zweiten Metallplatte (16 bzw. 15) zur Ausbildung einer Sandwich-Konstruktion befestigt wird, und daß Profilelemente (27,28) fest entlang von Bereichen der Kontur der ersten und dritten Metallplatte (16 bzw. 14) nahe den Enden der Rippen festgelegt werden.

10. Verfahren nach Anspruch 9, dadurch gekennzeichnet, daß das Hilfschassis (12) durch Ausformung eines Auflagebereiches (48) und zweier Seitenwände (46,47) mit einer Sandwich-Konfiguration hergestellt wird, welche durch Biegen einer Metallplatte zur Erzeugung von quer verlaufenden Rippen an dieser und durch Zwischenschaltung und Befestigung der gewellten Metallplatte zwischen zwei weiteren Metallplatten ausgebildet wird.

# Fig.1

EP 0 255 749 B1

Fig.2

Fig.3

# Fig. 4

EP 0 255 749 B1